(19) Europäisches Patentamt
European Patent Office
Office européen des brevets

(11) **EP 2 667 161 A1**

(12) **EUROPEAN PATENT APPLICATION**

(43) Date of publication:
**27.11.2013 Bulletin 2013/48**

(51) Int Cl.:
**G01F 1/78** *(2006.01)*          **G01F 15/00** *(2006.01)*
**G05D 7/06** *(2006.01)*

(21) Application number: **12169389.9**

(22) Date of filing: **24.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Air Products and Chemicals, Inc.**
Allentown, PA 18195-1501 (US)

(72) Inventor: **Downie, Neil Alexander**
Odiham RG29 1JN (GB)

(74) Representative: **Markham, Jonathan**
**Beck Greener**
**Fulwood House**
**12 Fulwood Place**
**London WC1V 6HR (GB)**

(54) **Method of, and apparatus for, measuring the flow rate of a gas**

(57) There is provided a meter for measuring the flow rate of a gas along a conduit, the meter comprising a sensor assembly including a piezoelectric crystal oscillator comprising two planar tines in contact with, and extending into, said gas flow when the meter is in use, said sensor assembly being arranged: to measure the voltage generated by movement of the planar tines of said piezoelectric oscillator in the gas flow along the conduit; and to determine, from the generated voltage, the flow rate of gas along said conduit.

*Fig. 2*

## Description

The present invention relates a method of, and apparatus for, measuring the flow rate of a gas. More particularly, the present invention relates to a method of, and apparatus for, measuring the flow of a gas using a piezoelectric oscillator.

The methods and apparatus described herein can be applied to systems where fluids of relatively high pressure (e.g. about 10 bar or higher) are present, such as for example, the supply of fluids in high pressure cylinders or manufacturing plants utilising high pressure fluids. The present invention relates particularly to "clean" gases, i.e. gases with little or no impurities or contaminants such as water vapour or dust.

The present invention is particularly applicable to permanent gases. Permanent gases are gases which cannot be liquefied by pressure alone, and for example can be supplied in cylinders at pressures up to 450 bar g (where bar g is a measure of the pressure above atmospheric pressure). Examples are Argon and Nitrogen. However, this is not to be taken as limiting and the term gas may be considered to encompass a wider range of gases, for example, both a permanent gas and a vapour of a liquefied gas.

Vapours of liquefied gases are present above the liquid in a compressed gas cylinder. Gases which liquefy under pressure as they are compressed for filling into a cylinder are not permanent gases and are more accurately described as liquefied gases under pressure or as vapours of liquefied gases. As an example, nitrous oxide is supplied in a cylinder in liquid form, with an equilibrium vapour pressure of 44.4 bar g at 15° C. Such vapours are not permanent or true gases as they are liquefiable by pressure or temperature around ambient conditions.

A compressed gas cylinder is a pressure vessel designed to contain gases at high pressures, i.e. at pressures significantly greater than atmospheric pressure. Compressed gas cylinders are used in a wide range of markets, from the low cost general industrial market, through the medical market, to higher cost applications, such as electronics manufacture utilising high purity corrosive, toxic or pyrophoric speciality gases. Commonly, pressurised gas containers comprise steel, aluminium or composites and are capable of storing compressed, liquefied or dissolved gases with a maximum filling pressure up to 450 bar g for most gases, and up to 900 bar g for gases such as hydrogen and helium.

In order to dispense gases effectively and controllably from a gas cylinder or other pressure vessel, a valve or regulator is required. Often the two are combined to form a Valve with Integrated Pressure Regulator (VIPR). The regulator is able to regulate the flow of the gas such that the gas is dispensed at a constant, or user variable, pressure.

For many applications, it is desirable to know the flow rate of gas from a gas cylinder. This may be critical for many applications; for example, medical applications. A number of different mass flow meter arrangements are known.

A class of mass flow meters that are commonly used in many industrial applications are mechanical mass flow meters. Such meters include mechanical components which move or rotate to measure mass flow. One such type is the inertial flow meter (or coriolis flow meter) which measures fluid flow through the effect of the fluid on shaped tubes. Coriolis meters can handle a wide range of flow rates with high accuracy. However, in order to detect the flow rate, complex systems are required such as actuation, sensing, electronic and computational features.

Alternative mechanical-type mass flow meters are diaphragm meters, rotary meters and turbine meters. However, these types of meters are generally less accurate and involve moving parts which may be subject to wear. Further, meters such as rotary meters are only useful for measuring relatively low flow rates.

An alternative class of mass flow meters are electronic flow meters. Two main types are thermal meters and ultrasonic meters. Thermal flow meters measure the heat transfer through a heated tube to measure flow rate. Ultrasonic flow meters measure the speed of sound in a gaseous medium, sometimes averaging the speed of sound over multiple paths within the pipe. However, both types of electronic flow meter generally require significant signal processing hardware and are generally high-cost items.

A further type of known gas flow sensor is one which measures the noise of flow past a small obstruction in the flow. "A Novel Gas Flow Sensor Based on Sound Generated by Turbulence", K. S. Rabbani et al, IEEE Instrumentation and Measurement Technology Conference Ottawa, Canada, May 19-21, 1997 discloses a flow sensor comprising a microphone placed behind an obstruction. The microphone provides an electrical output which is conditioned and calibrated for flow rate. However, a disadvantage of such an arrangement is that external noise and/or vibration can affect the measurements.

According to a first aspect of the present invention, there is provided a method of measuring the flow rate of a gas along a conduit, the method comprising: a) locating a piezoelectric oscillator extending into the conduit and in contact with the gas, said piezoelectric oscillator comprising two planar tines; b) measuring the voltage generated by movement of the planar tines of said piezoelectric oscillator in the gas flow along the conduit; and c) determining, from the generated voltage, the flow rate of gas along said conduit.

In one embodiment, step a) comprises locating the planar tines of the piezoelectric oscillator substantially perpendicular to the flow of gas.

In one embodiment, step b) further comprises amplifying the voltage generated by the piezoelectric oscillator.

In one embodiment, step c) further comprises calculating the cube root of the amplified voltage to determine the flow rate of gas.

In one embodiment, said planar tines are arranged to oscillate at a frequency of approximately 32kHz or greater.

In one embodiment, the piezoelectric oscillator comprises a quartz crystal oscillator.

In one embodiment, the method further comprises the step of: d) determining the density of the gas from the resonant frequency of the piezoelectric oscillator.

In one embodiment, step d) further comprises e) driving the piezoelectric oscillator at a resonant frequency.

According to a second aspect of the present invention, there is provided a meter for measuring the flow rate of a gas along a conduit, the meter comprising a sensor assembly including a piezoelectric crystal oscillator comprising two planar tines in contact with, and extending into, said gas flow when the meter is in use, said sensor assembly being arranged: to measure the voltage generated by movement of the planar tines of said piezoelectric oscillator in the gas flow along the conduit; and to determine, from the generated voltage, the flow rate of gas along said conduit.

In one embodiment, the planar tines of the piezoelectric oscillator are arranged substantially perpendicular to the flow of gas.

In one embodiment, the sensor assembly further comprises an amplifier for amplifying the voltage generated by the piezoelectric oscillator.

In one embodiment, the sensor assembly is operable to calculate the cube root of the amplified voltage to determine the flow rate of gas.

In one embodiment, the sensor assembly is further operable to determine the density of the gas from the resonant frequency of the piezoelectric oscillator in the gas flow.

In one embodiment, the meter further comprises a drive circuit, wherein the drive circuit is operable to drive the piezoelectric oscillator at a resonant frequency.

In one embodiment, said planar tines are arranged to oscillate at a frequency of approximately 32kHz or greater.

In one embodiment, the piezoelectric oscillator comprises a quartz crystal oscillator.

In an embodiment, the quartz crystal is AT cut or SC cut.

In a variation, the surface of the quartz crystal is directly exposed to the gas.

In one embodiment, the sensor assembly comprises a power source. In one arrangement, the power source comprises a lithium battery.

In one embodiment, the sensor assembly comprises a processor.

In one arrangement, the meter is arranged downstream of a pressure regulator or valve.

In a further arrangement, the meter is arranged to control electronically the pressure regulator or valve in response to the measured mass flow rate through the flow restriction orifice.

According to a third embodiment of the present invention, there is provided a computer program product executable by a programmable processing apparatus, comprising one or more software portions for performing the steps of the first aspect.

According to a fourth embodiment of the present invention, there is provided a computer usable storage medium having a computer program product according to the fourth aspect stored thereon.

Embodiments of the present invention will now be described in detail with reference to the accompanying drawings, in which:

Figure 1 is a schematic diagram of a gas cylinder and regulator assembly;

Figure 2 is a schematic diagram showing a regulator assembly and a meter according to a first embodiment of the invention;

Figure 3 is a schematic diagram showing a regulator assembly and a meter according to a second embodiment of the invention;

Figure 4 shows a graph of Noise Voltage (mV) on the Y-axis as a function of flow rate (litres/min);

Figure 5 shows a graph of the cube root of Noise Voltage on the Y-axis as a function of flow rate (litres/min);

Figure 6 shows a graph of Noise Voltage (mV) on the Y-axis as a function of time (seconds);

Figure 7 shows a schematic diagram of an electronic amplifier circuit for measuring both gas flow and density;

Figure 8 is a flow chart illustrating a method according to a described embodiment; and

Figure 9 shows an alternative arrangement using a remote electronic data unit.

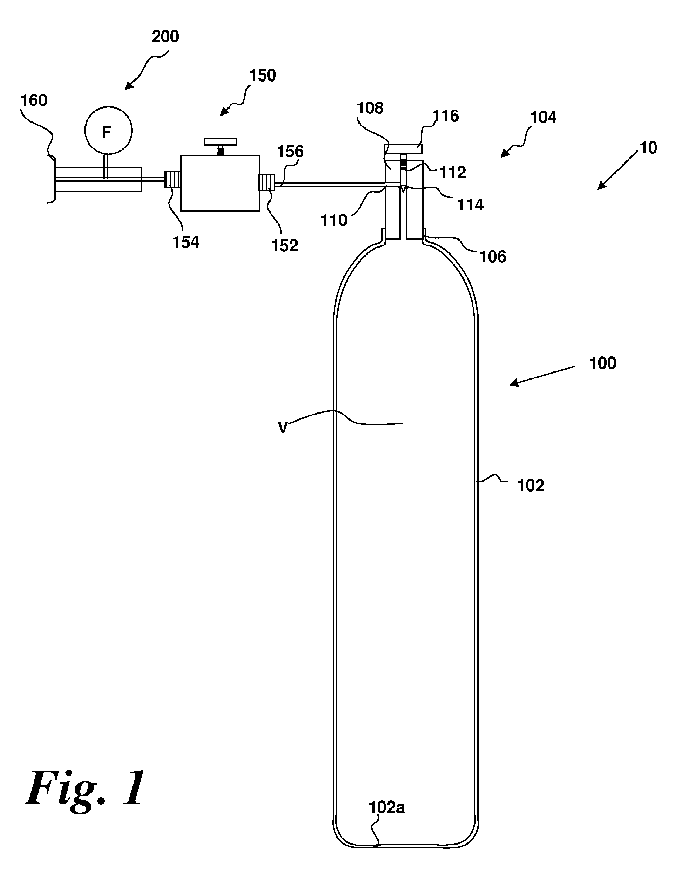

Figure 1 shows a schematic view of a gas cylinder assembly 10 according to an embodiment of the invention. Figure 1 shows a schematic view of a situation in which the present invention may be used. A gas cylinder 100, regulator 150 and meter 200 are provided.

The gas cylinder 100 has a gas cylinder body 102 and a valve 104. The gas cylinder body 102 comprises a generally cylindrical pressure vessel having a flat base 102a arranged to enable the gas cylinder assembly 10 to stand unsupported on a flat surface.

The gas cylinder body 102 is formed from steel, aluminium and/or composites material and is adapted and arranged to withstand internal pressures up to approximately 900 bar g. An aperture 106 is located at a proximal end of the gas cylinder body 102 opposite to the base 102a and comprises a screw thread (not shown) adapted to receive the valve 104.

The gas cylinder 100 defines a pressure vessel having an internal volume V. Any suitable fluid may be contained within the gas cylinder 100. However, the present embodiment relates, but is not exclusively limited to, purified permanent gases which are free from impurities such as dust and/or moisture. Non-exhaustive examples of such gases may be: Oxygen, Nitrogen, Argon, Helium, Hydrogen, Methane, Nitrogen Trifluoride, Carbon Monoxide, Krypton or Neon.

The valve 104 comprises a housing 108, an outlet 110, a valve body 112 and a valve seat 114. The housing 108 comprises a complementary screw thread for engagement with the aperture 106 of the gas cylinder body 102. The outlet 110 is adapted and arranged to enable the gas cylinder 100 to be connected to other components in a gas assembly; for example, hoses, pipes, or further pressure valves or regulators. The valve 104 may, optionally, comprise a VIPR (Valve with Integrated Pressure Reduction). In this situation, the regulator 150 may be omitted.

The valve body 112 can be axially adjusted towards or away from the valve seat 114 by means of rotation of a graspable handle 116 selectively to open or to close the outlet 110. In other words, movement of the valve body 112 towards or away from the valve seat 112 selectively controls the area of the communication passageway between the interior of the gas cylinder body 102 and the outlet 110. This, in turn, controls the flow of gas from the interior of the gas cylinder assembly 100 to the external environment.

A regulator 150 is located downstream of the outlet 110. The regulator 150 has an inlet 152 and an outlet 154. The inlet 152 of the regulator 150 is connected to an inlet pipe 156 which provides a communication path between the outlet 110 of the gas cylinder 100 and the regulator 150. The inlet 152 of the regulator 150 is arranged to receive gas at a high pressure from the outlet 110 of the gas cylinder 100. This may be any suitable pressure; however, generally, the pressure of gas exiting the outlet 110 will be in excess of 20 bar and more likely to be in the region of 100 - 900 bar.

The outlet 154 is connected to an outlet pipe 158. A coupling 160 is located at the distal end of the outlet pipe 158 and is adapted for connection to further pipes or devices (not shown) for which the gas is required.

A meter 200 is located in communication with the outlet pipe 158 between the outlet 154 and the coupling 160. The meter 200 is located immediately downstream of the regulator 150 and is arranged to determine the flow rate of the gas delivered to the outlet 160.

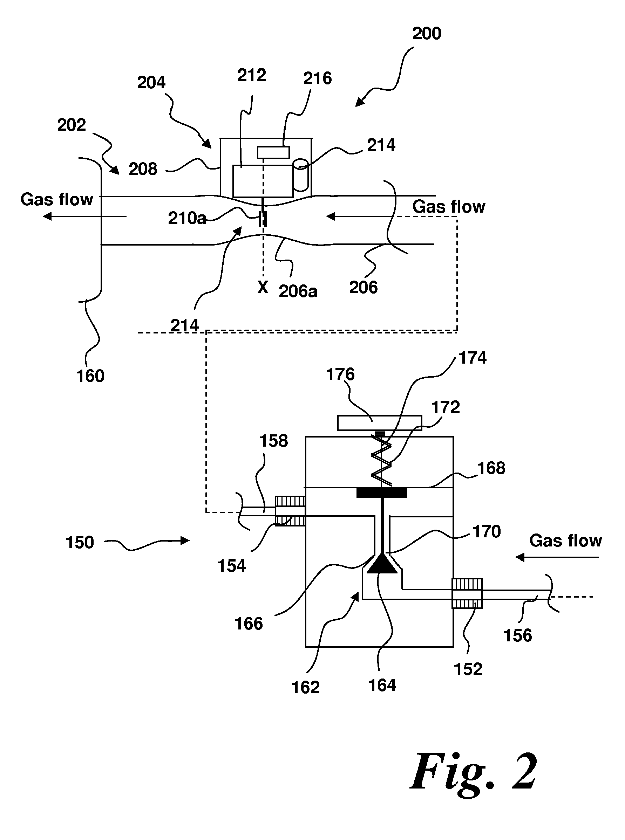

The regulator 150 and meter 200 according to a first embodiment of the present invention are shown in greater detail in Figure 2.

In this embodiment, the regulator 150 comprises a single diaphragm regulator. However, the skilled person would be readily aware of variations that could be used with the present invention; for example, a two diaphragm regulator or other arrangement.

The regulator 150 comprises a valve region 162 in communication with the inlet 152 and outlet 154. The valve region 162 comprises a poppet valve 164 located adjacent a valve seat 166. The poppet valve 164 is connected to a diaphragm 168 which is configured to enable translational movement of the poppet valve 164 towards and away from the valve seat 166 to close and open respectively an aperture 170 therebetween.

The diaphragm 168 is resiliently biased by a spring 172 located about a shaft 174.

The regulator 150 is operable to receive gas from the outlet 110 at full cylinder pressure (e.g. 100 bar), but to deliver gas at a substantially constant fixed low pressure (e.g. 5 bar) to the outlet 154. This is achieved by a feedback mechanism whereby the pressure of gas downstream of the aperture 170 is operable to act on the diaphragm 168 in opposition to the biasing force of the spring 172.

Should the pressure of gas in the region adjacent the diaphragm 168 exceed the specified level, the diaphragm 168 is operable to move upwards (relative to Figure 2). As a result, the poppet valve 164 is moved closer to the valve seat 166, reducing the size of the aperture 170 and, consequently, restricting flow of gas from the inlet 152 to the outlet 154. In general, the competing forces of the resistance of the spring 172 and the pressure of the gas will result in an equilibrium position of the diaphragm and, consequently, delivery of a constant pressure of gas at the outlet 154.

A graspable handle 176 is provided to enable a user to adjust the biasing force of the spring 172, thereby moving the position of the diaphragm 168 and, as a result, adjusting the equilibrium spacing between the poppet valve 164 and the valve seat 166. This enables adjustment of the dimensions of the aperture 170 through which the high pressure gas flow from the outlet 110 can pass.

The meter 200 comprises a body 202 and a sensor assembly 204. The body 202 may comprise any suitable material; for example, steel, aluminium or composites. The body 202 comprises a conduit 206 and a housing 208. The conduit 206 is in communication with the interior of the outlet pipe 158 and is arranged to connect thereto. The conduit 206 provides a fluid communication pathway between the outlet 154 and the coupling 160 (and, concomitantly, user devices or applications connected to the coupling 160).

The conduit 206 is, in this embodiment, generally cylindrical. Furthermore, in this embodiment, the conduit 206 comprises a flow restriction 206a. The flow restriction 206a comprises a section of the conduit having a reduced diameter. This increases the flow and assists the sensor assembly 204 in measuring the flow rate as will be described later. By way of example, a constriction of a half the diameter of the un-constricted portion of the pipe is sufficient. A severe constriction, such as an orifice, is not necessary.

The housing 208 is arranged to contain at least a part of the sensor assembly 204. The interior of the housing 208 may be at atmospheric pressure or may be in communication with the interior of the conduit 206 and, consequently, at the same pressure as the interior of the outlet pipe 158. This would eliminate the requirement for a pressure feed-through between the housing 208 and the interior of the conduit 206.

Alternatively, the housing 208 could be provided as part of the conduit 206. For example, a part of the conduit 206 could be widened to accommodate the sensor assembly 204. These arrangements are practicable because the inventors have found that only a few components of the sensor assembly 204 are sensitive to high pressure. In particular, larger components such as batteries can be susceptible to high pressures. However, it has been found that lithium batteries perform particularly well under the high pressures which may be encountered in the conduit 206. However, alternative suitable power sources would be readily be contemplated by the skilled person.

The potential location of the sensor assembly 204 entirely within the conduit 206 provides additional flexibility when configuring the meter 200. In particular, the location of relatively fragile electronic components entirely within the metal or composite walls of the body 202 without the requirement for a protrusion such as the housing 208 provides considerable protection from environmental or accidental damage. This is particularly important, for example, in storage areas or depots, where gas cylinders may be located adjacent other gas cylinders, heavy machinery or rough surfaces.

Additionally, the internal location of the sensor assembly 204 protects these components from environmental conditions such as salt, water and other contaminants. This would allow, for example, a high impedance circuit which is highly sensitive to salt and water damage to be used as part of the sensor assembly 204.

The meter 200 is arranged to measure the flow rate of the gas along the conduit. The sensor assembly 204 comprises a quartz crystal oscillator 210 connected to an amplifier circuit 212, a battery 214 and a microprocessor 216.

In this embodiment, the quartz crystal oscillator 210 is located in communication with interior of the conduit 206, whist the remaining components of the sensor assembly 204 are located within the housing 208. In other words, the quartz crystal oscillator 210 is immersed in the gas upstream of the orifice plate 210.

The quartz crystal oscillator 210 comprises a planar section of cut quartz. As shown in Figure 2, the quartz crystal oscillator 210 of the present embodiment is tuning fork-shaped and comprises a pair of tines 210a approximately 5mm long arranged to oscillate at a resonant frequency of 32.768 kHz in a vacuum. The tines 210a are formed in the planar section of quartz. The tines 210a of the fork oscillate normally in their fundamental mode, in which they move synchronously towards and away from each other at the resonant frequency. Oscillations of the crystal 210 at frequencies other than the resonant frequency rapidly lose amplitude and die out.

Quartz demonstrates piezoelectric behaviour, i.e. the application of a voltage across the crystal causes the crystal to change shape, generating a mechanical force. Conversely, a mechanical force applied to the crystal produces an electrical charge. It is this property that is exploited in the present invention.

Two parallel surfaces of the quartz crystal oscillator 210 are metallised in order to provide electrical connections across the bulk crystal. When a voltage is applied across the crystal by means of the metal contacts, the crystal changes shape. By application of an alternating voltage to the crystal, the crystal can be caused to oscillate. Concomitantly, oscillation of the tines 210a of the crystal 210 (i.e. a change in shape of the crystal 210) causes a voltage to be generated across the electrical connections.

The quartz crystal oscillator 210 is located in the flow along the conduit 206. Specifically, the quartz crystal oscillator 210 is located in the flow constriction 206a along the conduit 206. This increases the flow speed of gas past the quartz crystal oscillator 210

The quartz crystal oscillator 210 is operable to act both a flow obstruction and as a flow detector. Therefore, the quartz crystal oscillator 210 is operable to extend into the gas flow along the conduit 206. The long axis X of the crystal oscillator 210 is substantially perpendicular to the direction of flow as shown. In other words, parallel tines 210a of the tuning fork-type quartz crystal oscillator 210 project into the conduit 206 away from the interior wall of the conduit 206.

The tines 210a of the tuning-fork-type crystal 210 lie parallel to one another in a plane. The quartz crystal oscillator 210 may be orientated in the flow such that the plane is substantially parallel to the flow direction (as shown in Figure 2). Alternatively, the quartz crystal oscillator 210 may be oriented such that the plane lies perpendicular or orthogonal to the flow direction, or an intermediate angle.

In addition, the long axis X of the quartz crystal oscillator 210 need not be orientated exactly perpendicular to the flow. What is important is that the quartz crystal oscillator 210 projects into the flow in order to cause a flow disturbance. Therefore, the skilled person would be readily aware of other angles relative to the flow which could be used; for example, obtuse angles (where the distal end of the quartz crystal oscillator 210 is angled downstream of the proximal end thereof), or acute angles (where the distal end of the quartz crystal oscillator 210 is angled upstream of the proximal end thereof).

The physical size and thickness of the quartz crystal determines the characteristic or resonant frequency of the quartz crystal. Indeed, the characteristic or resonant frequency of the crystal 210 is inversely proportional to the physical thickness between the two metallised surfaces. Quartz crystal oscillators are well known in the art and so the structure of the quartz crystal oscillator 210 will not be described further here.

Additionally, the resonant vibration frequency of a quartz crystal will vary depending upon the environment in which the crystal is located. In a vacuum, the crystal will have a particular frequency. However, this frequency will change in different environments. For example, in a fluid, the vibration of the crystal will be damped by the surrounding molecules and this will affect the resonant frequency and the energy required to oscillate the crystal at a given amplitude.

Additionally, adsorption of gas or deposition of surrounding materials onto the crystal will affect the mass of the vibrating crystal, altering the resonant frequency. Such adsorption or deposition of material forms the basis for commonly used selective gas analysers in which an absorbing layer is formed on the crystal and increases in mass as gas is absorbed. However, in the present case, no coating is applied to the quartz crystal oscillator 210.

Fused (or non-crystalline) quartz has a very low temperature-dependent coefficient of expansion and a low coefficient of elasticity. This reduces the dependence of the fundamental frequency on temperature and, as will be shown, temperature effects are minimal.

Additionally, it is desirable to use quartz which is AT cut or SC cut. In other words, the planar section of quartz is cut at particular angles, so that the temperature coefficient of the oscillation frequency can be arranged to be parabolic with a wide peak around room temperature. Therefore, the crystal oscillator can be arranged such that the slope at top of the peak is precisely zero.

Such quartz crystals are commonly available at relative low cost. In contrast to the majority of quartz crystal oscillators which are used *in vacuo,* in the present embodiment the quartz crystal oscillator 210 is exposed to the gas under pressure in the conduit 206.

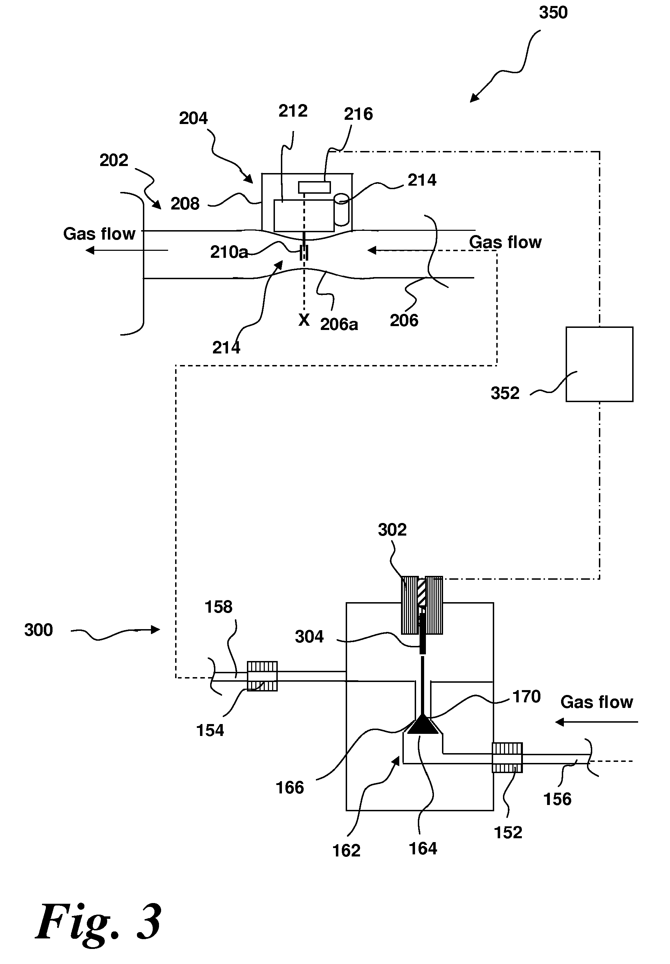

A second embodiment of the invention is shown in Figure 3. The features of the second embodiment shown in Figure 3 which are in common with the first embodiment of Figure 2 are allocated the same reference numerals and will not be described again here.

In the embodiment of Figure 3, the regulator 300 differs from the regulator 150 of the Figure 2 embodiment in that the regulator 300 is arranged to provide automatic control of gas from the outlet 154 by means of a solenoid valve 302. The solenoid valve 302 comprises an armature 304 which is movable in response to an electric current through the coils (not shown) of the solenoid valve 302. The armature 304 is movable to directly open or close the poppet valve 164 and, consequently, the aperture 170.

The solenoid valve 302 shown in Figure 3 is in the normally open condition. In other words, in the absence of an electrical current through the solenoid valve 302, the armature 304 is in an extended position such that the poppet valve 164 is open, i.e. the aperture 170 is open. If a current is applied to the solenoid valve 302, the armature 304 will retract and the poppet valve 164 will close.

The skilled person would be readily aware of alternative variations of solenoid valve which could be used with the present invention. For example the armature 304 may act directly on the diaphragm, or may control flow through a narrow conduit in communication with the outlet 154 in order to regulate movement of the diaphragm 168. Alternatively, the poppet valve could be eliminated and the diaphragm 168 itself could be the valve member controlling directly the flow of gas from the inlet 152 to the outlet 154.

The second embodiment comprises a flow meter 350. Components of the meter 350 in common with the meter 200 are allocated the same reference numerals for clarity.

The meter 350 is substantially similar to the meter 200 of the first embodiment. However, the meter 350 further comprises an electronic solenoid drive 352 connected to the solenoid valve 302 and to the sensor assembly 204. The solenoid drive 352 is arranged to receive a signal from the sensor assembly 204 and to control the solenoid valve 302 in response to that signal and, consequently, control the flow through the regulator 300.

The solenoid drive 352 may comprise any suitable drive circuit for controlling the solenoid valve 302. One suitable circuit may be an operational amplifier arrangement having an input from the sensor assembly 204 to the negative terminal of the operational amplifier. Consequently, to the positive terminal could be attached a variable resistor designed to provide a constant reference level and act as a comparator.

An input from the sensor assembly 204 to the solenoid drive 352 will cause operation of the solenoid valve 302. For example, if the input signal from the sensor assembly 204 (or, alternatively, the processor 216) exceeds a particular threshold level, the solenoid drive 352 may energise the solenoid valve 302. The solenoid valve 302 may be controlled in a digital (i.e. on or off) manner where a DC voltage is varied between a maximum and a minimum value. Alternatively, the DC voltage from the solenoid drive 352 may be continuously variable to adjust the position of the poppet valve 164 accurately in an analogue manner.

Additionally or alternatively, the solenoid drive 352 may control the solenoid valve 302 by means of a DC output comprising an AC component. Since the extension of the armature 304 from the solenoid valve 302 is approximately proportional to the applied current, this causes the armature 304 of the solenoid valve 302 to oscillate. Such oscillations mitigate "stiction" of the armature 304, i.e. assist in preventing the armature 304 from becoming stuck or jammed.

Alternatively, other control arrangements, such as FETs, microprocessors or ASICs may be used as appropriate to control the operation of the solenoid valve 302. Further, as discussed, the solenoid valve 302 may operate in either a digital (i.e. on/off) or analogue (i.e. continuously variable) modes to enable accurate movement of the poppet valve 164 or similar.

The first or second embodiments may additionally comprise a display (not shown) to show a user the results of measurements made on the detected gas. Alternatively, the display may be located remote from the meters 200, 350 and the relevant data may be communicated remotely.

The theory and operation of the flow noise sensor will now be described. The quartz crystal oscillator 210 has a resonant frequency which is dependent upon the density of the fluid in which it is located. Exposing an oscillating tuning fork-type planar crystal oscillator to a gas leads to a shift and damping of the resonant frequency of the crystal (when compared to the resonant frequency of the crystal in a vacuum). There are a number of reasons for this. Whilst there is a damping effect of the gas on the oscillations of the crystal, the gas adjacent the vibrating tines 210a of the tuning fork crystal oscillator 210 increases the effective mass of the oscillator. This leads to a reduction in the resonant frequency of the quartz crystal oscillator according to the motion of a one-sided, fixed elastic beam:

$$1) \qquad f = \frac{f_0}{\sqrt{1 + \frac{\rho}{M_0}}}$$

Where f is the frequency of oscillation, $f_0$ is the frequency of oscillation in a vacuum, $\rho$ is the gas density, and $M_0$ is a constant.

The density $\rho$ will in almost all cases be small compared to $M_0$, so that the formula can be approximated by the linear equation:

$$2) \qquad f = f_0 (1 - \frac{\rho}{2M_0})$$

which can re-expressed in terms of the frequency deviation $\Delta f$ from $f_0$ as set out in equation 3):

$$3) \quad \Delta f = \frac{1}{2} (\frac{f_0}{M_0}) \rho$$

Consequently, to a good approximation, the change in frequency is proportional to the change in density of the gas to which the quartz crystal oscillator is exposed.

In general, the sensitivity of the quartz crystal oscillator 210 is that a 5% change in frequency is seen with, for example, Oxygen gas (having Atomic mass number 32) at 250 bar when compared to atmospheric pressure.

An advantage of the use of the quartz crystal oscillator 210 is that the resonant frequency is well defined and, as set out above, changes only slowly with gas pressure. In addition, the quartz crystal oscillator 210 is relatively insensitive to vibration at frequencies other than the resonant frequency and so is relatively unaffected by external vibrations and sound.

When a gas flow is present along the conduit 206, the gas will flow past the quartz crystal oscillator 210 in the flow restriction 206a. Since the quartz crystal oscillator 210 is essentially an obstruction in the gas flow, the quartz crystal oscillator 210 will create drag on the gas flow and turbulent flow will be generated. This causes flow noise.

The drag force on, and turbulence around, the quartz crystal oscillator 210 will cause movement of the tines 210a and this, in turn, will generate a voltage across the electrical connections of the quartz crystal oscillator 210. This voltage is known as the noise voltage ($V_n$). It has been found empirically that the noise voltage $V_n$ produced is proportional the flow rate (Q) cubed, as set out in equation 4):

$$4) \qquad V_n = KQ^3$$

where K is in many flow situations a constant, although it does vary slowly with gas density.

Therefore, a measurement of the noise voltage $V_n$, when passed through a cube root filter, can provide an indication of the flow rate. Typically, a 5mm long quartz crystal oscillator having a resonant frequency of 32.768 kHz crystal gives, when mounted in a 3 mm pipe through which a flow rate of 3 litres/min is flowing, a voltage of 30 mW when amplified by a factor of 10 by the amplifier circuit 212. Typical noise on this signal leads to a typical +/- 2% error in flow after a 10 second time constant smoothing digital filter is applied.

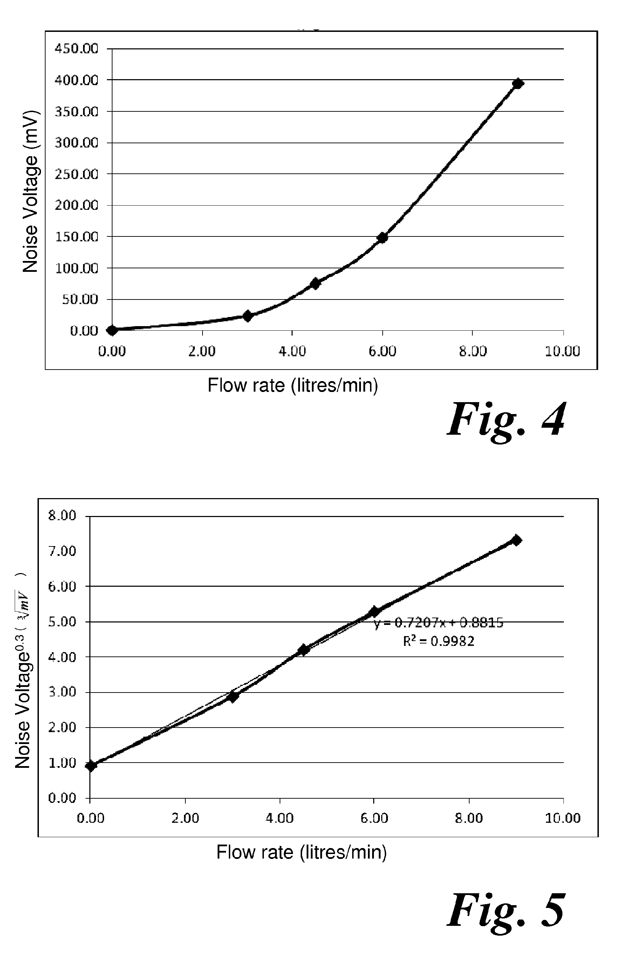

Figure 4 shows a graph of noise voltage $V_n$ (on the Y-axis) in mV as a function of flow rate (on the X-axis) in litres per minute. The data points in this case are each averaged over a minute.

Figure 5 shows the same data noise voltage $V_n$ (on the Y-axis) in mV but with a cube root applied as a function of flow rate (on the X-axis) in litres per minute. As shown, the graph is approximately linear.

In the examples of Figures 4 and 5, a 5mm long quartz crystal oscillator having a resonant frequency of 32.8kHz crystal was used, the signal from which was passed through a single stage amplifier (such as a standard 741 amplifier) with a voltage gain of 10 times.

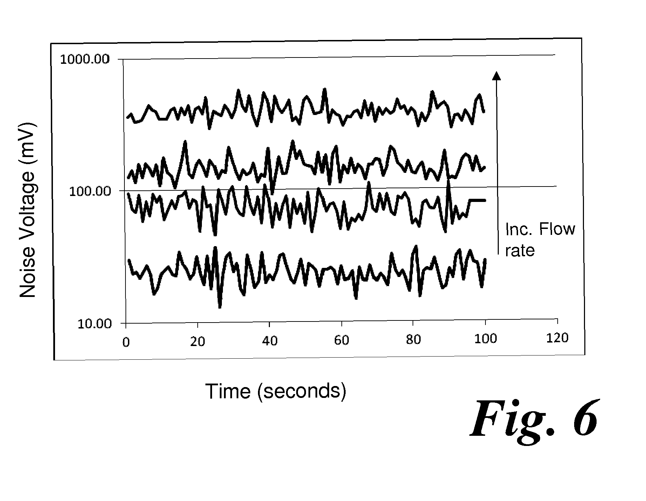

Figure 6 shows a graph of Noise Voltage as a function of time. Measurements were taken at one second intervals for a period of 100 seconds. The four lines represent flow noise measured at 3, 4.5, 6 and 9 litres/minute respectively, with the fastest flow rate generating the highest voltage.

In addition, the quartz crystal oscillator 210 can be used in an active or semiactive mode rather than just as a passive sensor to measure flow noise. As discussed above in relation to equations 1) to 3), the quartz crystal oscillator 210 will resonate at a frequency $f$ which is proportional to the density $\rho$ of the surrounding gas.

Therefore, in accordance with equations 1) to 3) above, the frequency $f$ can be measured accurately and the density of the gas $\rho$ accurately estimated. This information can then be output to the user and/or utilised to adjust the calibration factor K for equation 4) above, since it has been found experimentally that the value of the empirical constant K in equation 4) varies slowly with gas density.

The frequency $f$ can be derived directly from the flow-excited vibration of the quartz crystal oscillator 210, since the quartz crystal oscillator 210 will tend to resonate at its resonant frequency $f$ in a particular medium.

Alternatively, the frequency $f$ can be deliberately excited by a drive circuit on an intermittent basis and for a short time period. This will ensure that the measured resonant frequency $f$ is at a well-defined amplitude and a more accurate measurement can be made.

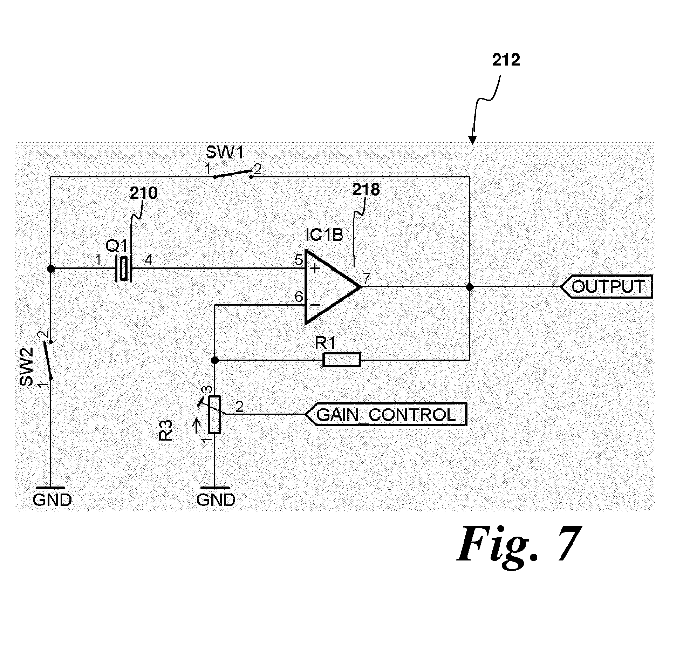

An example of an amplifier circuit 212 suitable for use with the present invention is shown in Figure 7. The amplifier circuit 212 comprises an amplifier 218, resistors R1 and R3 and switches SW1 and SW2.

The amplifier 218, in conjunction with resistors R1 and R3 form a non-inverting amplifier. R3 is a variable resistor and variation of the value of R3 is operable to control the gain of the amplifier (i.e. increasing the value of R3 reduces the gain). This can be used to set the appropriate gain level both to sustain oscillations (when used to excite the quartz crystal oscillator 210) and to get a measurable signal level which is sufficiently high and unsaturated when used to amplify the signal from the quartz crystal oscillator 210 when functioning as a flow noise detector.

Switches SW1 and SW2 are operable to switch the circuit 212 between amplifier and oscillator drive modes. They may comprise, for example, Field Effect Transistor (FET) switches or electro-mechanical relays.

When used as an amplifier to amplify the Noise Voltage generated by the quartz crystal oscillator 210 (when used as a flow noise detector), switch SW1 is in the off position (i.e. open) and switch SW2 is in the on (i.e. closed) position.

In the amplifier mode, the output reflects the voltage produced when the quartz crystal oscillator 210 is exited by an external source. The gain of the amplifier 218 is adjusted so that the output signal is sufficient for accurate measurement but is not saturated.

Conversely, when used as an amplifier to amplify the Noise Voltage generated by the quartz crystal oscillator 210 (when used as a flow noise detector), switch SW1 is in the on position (i.e. closed) and switch SW2 is in the off (i.e. open) position.

In the oscillator mode, the quartz crystal oscillator 210 is excited by the output of the amplifier 218 and this is fed back to the input of the amplifier 218. If the gain of the amplifier 218 is high enough, the oscillations will be sustained. The frequency $f$ of the oscillations may be measured using a frequency meter connected to the output.

In a variation, switch SW1 could be replaced with a resistor in which case SW2 alone would control the mode of operation.

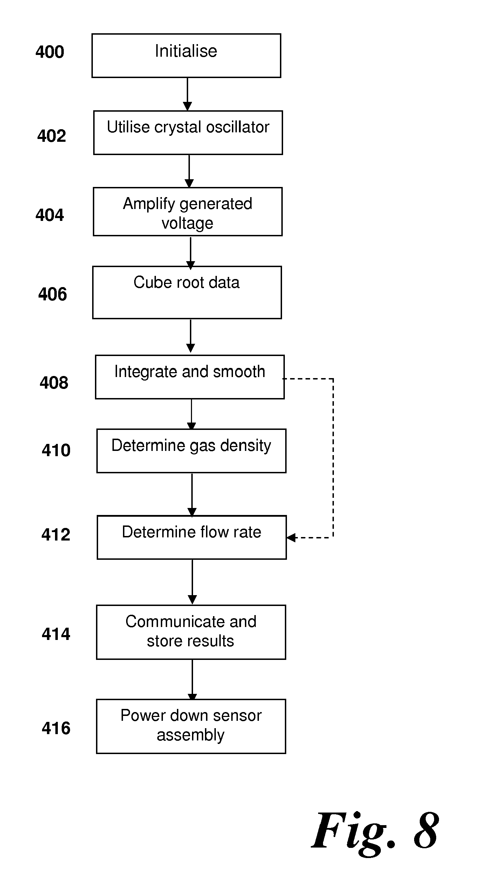

A method according to an embodiment of the present invention will now be described with reference to Figure 8. The method described below is applicable to each of the first and second embodiments described above.

*Step 400: Initialise measurement*

At step 400, the measurement of the flow rate of gas through the conduit 206 is initialised. This may be activated by, for example, a user pressing a button on the outside of the housing 208. Alternatively, the measurement may be initiated by means of a remote connection, for example, a signal transmitted across a wireless network and received by the meter 200, 350 through an antenna.

As a further alternative or addition, the meter 200, 350 may be configured to initialise remotely or on a timer. The method proceeds to step 402.

*Step 402: Utilise quartz crystal oscillator to generate voltage*

Once initialised, the flow of gas past the quartz crystal oscillator 210 will cause the quartz crystal oscillator 210 to move and to generate a voltage by means of the piezoelectric effect as a result of flow turbulence and drag force. As will be appreciated, the quartz crystal oscillator 210 is, in essence, a self-contained detector and flow obstruction.

*Step 404: Amplify generated voltage*

The amplifier circuit 212 then amplifies the signal generated by the quartz crystal oscillator 210. A single stage amplifier circuit 212 (including amplifier 218) is used in the present embodiment, although multi-stage systems could be utilised. The amplifier 212 has a voltage gain of 10 in this embodiment, although other gains could be used as required.

The method proceeds to step 406.

*Step 406: Cube root data*

As set out above, the noise voltage is proportional to the cube of the flow Q. Therefore, a cube root circuit is implemented to obtain data values proportional to the flow rate Q. The method proceeds to step 408.

*Step 408: Integrate and smooth*

In order to make a measurement, the cube rooted and amplified voltage value is measured for a period of approximately 10 seconds. This is to enable the reading to stabilise in order to determine an accurate measurement. The data is then smoothed through use of a digital filter. This step, and the previous step, may be carried out in the microprocessor 216 or by specialised circuitry on the amplifier circuit 212. The microprocessor 216 may also log the time, $T_1$, when the measurement was started.

*Step 410: Derive gas density from frequency*

Step 410 is optional and may be carried out as required during operation of the flow meter. As set out above in relation to equations 1), 2) and 3), the gas density depends approximately linearly on the resonant frequency of the quartz crystal oscillator 210. This frequency *f* is measured and the density information is utilised as required by the processor 216.

The method proceeds to Step 412.

*Step 412: Determine the flow of gas*

This is done using equation 4) above where the noise voltage is measured in steps 402 and the default value of the constant K has been previously determined. If the density has been determined in step 410, then the value of the constant K may be updated as required with relevant density information.

The method then proceeds to step 414.

*Step 414: Communicate and store results*

The flow rate of the gas can be displayed in a number of ways. For example, a screen (not shown) attached to the housing 208, body 202 or regulator 150, 300 could display the flow rate of the gas. In the alternative, the flow rate measurement could be communicated remotely to a base station or to a meter located on an adjacent fitting as will be described later.

As a yet further alternative, the flow rate of gas at time $T_1$ could be stored in a memory local to said microprocessor 216 to generate a time log.

The method then proceeds to step 416.

*Step 416: Power down sensor assembly*

It is not necessary to keep the meter 200, 350 operational at all times. To the contrary, it is beneficial to reduce power consumption by switching the meter 200, 350 off when not in use. This prolongs the life of the battery 214.

Variations of the above embodiments will be apparent to the skilled person. The precise configuration of hardware and software components may differ and still fall within the scope of the present invention. The skilled person would be readily aware of alternative configurations which could be used.

For example, electronic functions could be split between units mounted on the cylinder permanently and units mounted on either a customer's usage station or temporarily mounted on the outlet of the cylinder such as the position normally used for a conventional flow meter.

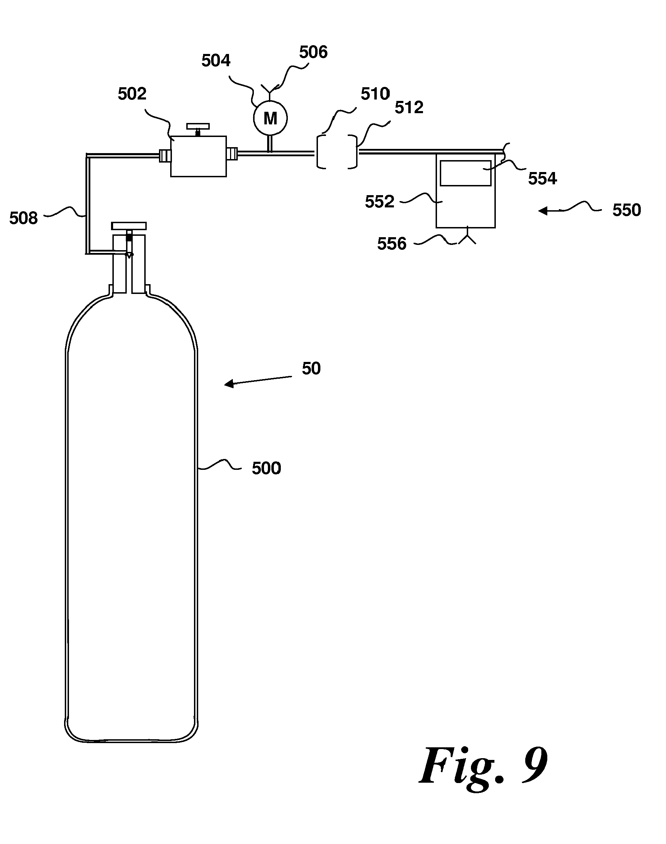

An example of this arrangement is shown with reference to Figure 9. The arrangement comprises a gas cylinder assembly 50 comprising a gas cylinder 500, a regulator 502 and a mass flow rate meter 504. The gas cylinder 500, regulator 502 and mass flow rate meter 504 are substantially similar to the gas cylinder 100, regulator 150 and meter 200, 350 substantially as previously described with reference to previous embodiments.

In this embodiment, the mass flow rate meter 504 comprises a quartz crystal oscillator and amplifier circuit (not shown) similar to the quartz crystal oscillator 210 and amplifier circuit 212 of earlier embodiments. An antenna 506 is provided for communication via any suitable remote communication protocol; for example, Bluetooth, Infra-red (IR) or RFID. Alternatively, one-wire communication may be utilised.

As a further alternative, acoustic communication methods may be used. The advantage of such methods is that remote communication can be effected without the requirement for an external antenna.

A connection pipe 508 is connected to the outlet of the gas cylinder 500. The connection pipe is terminated by a quick connect connection 510. The quick connect connection 510 enables connecting pipe work or components to be connected and disconnected easily and quickly from the gas cylinder 500.

A quick connect unit 550 is provided for connection to the gas cylinder 500. A complementary quick connect connector 512 is provided for connection to the connector 508. Further, the quick connect unit 550 is provided with a data unit 552. The data unit 552 comprises a display 554 and an antenna 556 for communication with the antenna 504 of the gas cylinder assembly 50. The display 554 may comprise, for example, an LCD, LED or daylight-readable display to minimise power consumption and maximise visibility of the display.

The data unit 552 may log various parameters as measured by the sensor assembly 502 of the gas cylinder assembly 50. For example, the data unit 552 could log flow rate versus time. Such a log could be useful, for example, to welding contractors wishing to check that gas flow was present and correct during lengthy gas welding procedures on critical components, or to supply a company data on a particular customer's usage.

Alternatively, data from the data unit 550 can be output to a computer-enabled welding machine (for welding applications) or other gas-using equipment, to allow the calculation of derived parameters, along with warning messages.

As an alternative, all of the above examples may, optionally, be processed, stored or obtained from a system located entirely on (or within) the gas cylinder 500 or housing 208 as discussed in terms of the meter 200, 350.

Whilst the above embodiments have been described with reference to the use of a quartz crystal oscillator, the skilled person would be readily aware of alternative piezoelectric materials which could also be used. For example, a non-exhaustive list may include crystal oscillators comprising: lithium tantalate, lithium niobate, lithium borate, berlinite, gallium arsenide, lithium tetraborate, aluminium phosphate, bismuth germanium oxide, polycrystalline zirconium titanate ceramics, high-alumina ceramics, silicon-zinc oxide composite, or dipotassium tartrate.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention.

## Claims

1. A method of measuring the flow rate of a gas along a conduit, the method comprising:

   a) locating a piezoelectric oscillator extending into the conduit and in contact with the gas, said piezoelectric oscillator comprising two planar tines;

   b) measuring the voltage generated by movement of the planar tines of said piezoelectric oscillator in the gas flow along the conduit; and

   c) determining, from the generated voltage, the flow rate of gas along said conduit.

2. A method according to claim 1, wherein step a) comprises locating the planar tines of the piezoelectric oscillator substantially perpendicular to the flow of gas.

3. A method according to claim 1 or 2, wherein step b) further comprises amplifying the voltage generated by the piezoelectric oscillator.

4. A method according to claim 3, wherein step c) further comprises calculating the cube root of the amplified voltage to determine the flow rate of gas.

5. A method according to any one of the preceding claims, further comprising the step of:

   d) determining the density of the gas from the resonant frequency of the piezoelectric oscillator.

6. A method according to claim 6, wherein step d) further comprises e) driving the piezoelectric oscillator at a resonant frequency.

7. A meter for measuring the flow rate of a gas along a conduit, the meter comprising a sensor assembly including a piezoelectric crystal oscillator comprising two planar tines in contact with, and extending into, said gas flow when the meter is in use, said sensor assembly being arranged: to measure the voltage generated by movement of the planar tines of said piezoelectric oscillator in the gas flow along the conduit; and to determine, from the generated voltage, the flow rate of gas along said conduit.

8. A meter according to claim 7, wherein the planar tines of the piezoelectric oscillator are arranged substantially perpendicular to the flow of gas.

9. A meter according to claim 7 or 8, wherein the sensor assembly further comprises an amplifier for amplifying the voltage generated by the piezoelectric oscillator.

10. A meter according to claim 9, wherein the sensor assembly is operable to calculate the cube root of the amplified voltage to determine the flow rate of gas.

11. A meter according to any one of claims 7 to 10, wherein the sensor assembly is further operable to determine the density of the gas from the resonant frequency of the piezoelectric oscillator in the gas flow.

12. A meter according to claim 11, further comprising a drive circuit, wherein the drive circuit is operable to drive the piezoelectric oscillator at a resonant frequency.

**13.** A method or meter according to any one of the preceding claims, wherein said planar tines are arranged to oscillate at a frequency of approximately 32kHz or greater.

**14.** A method or meter according to any one of the preceding claims, wherein the piezoelectric oscillator comprises a quartz crystal oscillator.

**15.** A computer program product executable by a programmable processing apparatus, comprising one or more software portions for performing the steps of any one of claims 1 to 6.

*Fig. 1*

200

204   212   216

202

208                              214

Gas flow                              Gas flow

210a

X   206a   206

214

160

176   174

172

158                              168

150

154                              170   Gas flow

166

162   164   152

*Fig. 2*

350

204    212    216

202

208    214

Gas flow

210a

Gas flow

X   206a

214    206

352

302

300

158    304

154

170   Gas flow

166

162    164    152

156

# *Fig. 3*

*Fig. 4*

*Fig. 5*

Fig. 6

*Fig. 7*

| 400 | Initialise |
| 402 | Utilise crystal oscillator |
| 404 | Amplify generated voltage |
| 406 | Cube root data |
| 408 | Integrate and smooth |
| 410 | Determine gas density |
| 412 | Determine flow rate |
| 414 | Communicate and store results |
| 416 | Power down sensor assembly |

*Fig. 8*

*Fig. 9*

Europäisches
Patentamt

European
Patent Office

Office européen
des brevets

# EUROPEAN SEARCH REPORT

**Application Number**

EP 12 16 9389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E<br>L | EP 2 458 348 A1 (AIR PROD & CHEM [US])<br>30 May 2012 (2012-05-30)<br>* the whole document *<br>----- | 1-3,5-9,<br>11-15 | INV.<br>G01F1/78<br>G01F15/00<br>G05D7/06 |
| X | EP 0 964 228 A1 (SIEMENS ELEMA AB [SE])<br>15 December 1999 (1999-12-15)<br>* the whole document *<br>----- | 1-3,7-9,<br>14,15 | |

TECHNICAL FIELDS
SEARCHED      (IPC)

G01F
G05D

The present search report has been drawn up for all claims

| Place of search | Date of completion of the search | Examiner |
|---|---|---|
| Munich | 4 October 2012 | Roetsch, Patrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 16 9389

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2012

| Patent document cited in search report | | Publication date | Patent family member(s) | | Publication date |
|---|---|---|---|---|---|
| EP 2458348 | A1 | 30-05-2012 | EP WO | 2458348 A1 2012072597 A1 | 30-05-2012 07-06-2012 |
| EP 0964228 | A1 | 15-12-1999 | EP JP US | 0964228 A1 2000028628 A 6345540 B1 | 15-12-1999 28-01-2000 12-02-2002 |

EPO FORM P0459

For more details about this annex : see Official Journal of the European Patent Office, No. 12/82

## REFERENCES CITED IN THE DESCRIPTION

**Non-patent literature cited in the description**

- **K. S. RABBANI et al.** A Novel Gas Flow Sensor Based on Sound Generated by Turbulence. *IEEE Instrumentation and Measurement Technology ConferenceOttawa, Canada,* 19 May 1997